# EUROPÄISCHE PATENTSCHRIFT

(11) **EP 0 447 670 B1**
(45) Veröffentlichungstag und Bekanntmachung des Hinweises auf die Patenterteilung: **26.07.1995**
(21) Anmeldenummer: 90125265.0
(22) Anmeldetag: 21.12.1990
(51) Int. Cl.: B27D 1/00, B27M 3/00, B32B 21/13, F26B 25/22

(54) **Verfahren zum Herstellen von Mehrschicht-Laminaterzeugnissen aus Holz und Anlage zur Durchführung des Verfahrens**
Apparatus and process for the manufacture of multiply wood products
Procédé et dispositif pour la fabrication de produits lamellés en bois

(30) Priorität: 17.03.1990 DE 4008682; 21.08.1990 DE 4026348
(43) Veröffentlichungstag der Anmeldung: 25.09.1991
(73) Patentinhaber: Gebrüder Linck Maschinenfabrik "Gatterlinck" GmbH & Co. KG, D-77697 Oberkirch (DE)
(72) Erfinder:
(74) Vertreter: Fuchs Mehler Weiss

(56) Entgegenhaltungen:
- EP-A- 0 376 918
- CA-A- 1 097 193
- DE-A- 3 623 235
- FR-A- 1 410 869

## Beschreibung

Die Erfindung betrifft ein Verfahren nach dem Oberbegriff des Patentanspruches 1 sowie eine Anlage zur Durchführung eines solchen Verfahrens, gemäß Oberbegriff des Anspruchs 9. Der Stand der Technik gemäß geweiligem Oberbegriff des Anspruchs 1 und des Anspruchs 9 ist aus der DE-A-3 623 235 bekannt.

Es ist bekannt, Mehrschicht-Massivholzplatten oder ähnliche Mehrschichtlaminaterzeugnisse aus Holz durch schichtweises Verleimen lamellenartiger dünner Bretter unter Druck in einer Presse zu erzeugen. Da bei derartigen Produkten die aufeinanderfolgenden Schichten aus den dünnen Brettern beispielsweise so gelegt werden können, daß die Faserrichtungen des Holzes kreuzweise angeordnet sind, haben derartige Erzeugnisse eine wesentlich gleichmäßigere Festigkeitsverteilung als unverleimtes, natürliches Holz. Außerdem wird durch die Mehrschichtigkeit der Einfluß von Schwachstellen im Holz, wie z.B. von Astlöchern, wesentlich vermindert.

Der Nachteil der Herstellung solcher an sich wünschenswerten Erzeugnisse lag bisher darin, daß beim Erzeugen der dünnen, lamellenartigen Bretter bis zu 40 % des Ausgangsholzes als Sägemehlabfall beim Sägen der Bretter anfallen. Dieser hohe Rohstoffverlust ist in vielen Fällen wirtschaftlich nicht vertretbar.

Es sind bereits Verfahren bekannt, mit denen Baumstämme oder Kanthölzer durch rein schneidendes Trennen spanlos in solche dünnen Bretter aufgeteilt werden können. Diese Schneidtechnik verlangt einerseits die Einhaltung bestimmter Verfahrensparameter und ist andererseits auch nicht ohne Einfluß auf das Enderzeugnis, weswegen bei der Herstellung von Mehrschicht-Laminaterzeugnissen aus geschnittenen Brettern zum Teil besondere Verarbeitungsmaßnahmen befolgt werden müssen. So kann beispielsweise eine zufriedenstellende Brettqualität nur dann erhalten werden, wenn das zu verarbeitende Holz eine gewisse Mindestfeuchte aufweist. Außerdem wird bevorzugt bei erhöhter Temperatur geschnitten. Diese hohe Holzfeuchte macht es erforderlich, die Bretter nach dem Schneiden und vor der Weiterverarbeitung zu diesen Laminaterzeugnissen wieder bis auf eine Feuchte von 15 Gew.-% und darunter zu trocknen.

Auch das Schneiden selbst hat Einfluß auf die erzeugten Bretter. Da die für das Schneiden verwendeten Messer eine endliche Dicke aufweisen müssen, wird das von einem Kantholz in Abtrennung befindliche Brett im Winkel des Messerkeils vom Kantholz weggebogen und dabei bestimmten mechanischen Beanspruchungen ausgesetzt. Das vom Kantholz abgetrennte Brett erhält dadurch zwei sich unterschiedlich verhaltende Seiten, nämlich eine "Messerseite", mit der es beim Abtrennen dem Messer zugewandt war, und eine "Gegenseite", die die Außenseite des Restkantholzes nach dem vorhergehenden Trennschritt geworden ist. Außerdem erfahren die Bretter durch das Ableiten am Messer eine gewisse Verwindung, so daß sie nach dem Schneidvorgang eventuell wieder gerichtet werden müssen.

Diese verschiedenen Einflüsse und Erkenntnisse haben dazu geführt, daß die Bretter nach dem bereits vorstehend erwähnten Trocknen gewisser Nachbehandlungen wie Oberflächenschleifen, Kantenbearbeitung usw. bedürfen, und daß es vorteilhaft ist, die Bretter mit bestimmter Ausrichtung ihrer Messer- und Gegenseiten in dem herzustellenden Laminaterzeugnis anzuordnen.

Trotz dieser verschiedenen Anpassungsmaßnahmen hat sich gezeigt, daß nach dem Verpressen der Platten an bestimmten Stellen kleine Oberflächenrisse oder -ausrisse zu beobachten sind. Beim Verarbeiten der Bretter entstand sowohl bei der Trocknung wie auch beim Verpressen der Bretterlagen zu den Platten teilweise ein stark knisterndes Geräusch. Solche Erscheinungen können dann auftreten, wenn entweder Holz zu schnell und intensiv getrocknet wird oder mit einem zu hohen Feuchtigkeitsgehalt in die Presse für die Plattenerzeugung gelangt. Bei nicht günstigem Trocknungsverlauf im Trockner kann eine sog. "Verschalung" der Oberfläche der Bretter eintreten, die darauf beruht, daß sich die ersten Oberflächenporen beim anfänglichen Trocknen schließen, so daß bei nachfolgender Temperatursteigerung die verdampfende Feuchtigkeit nicht schnell genug entweichen kann und sich mit Gewalt Platz schafft, wodurch Beschädigungen der Holzoberfläche entstehen können. Die gleiche Erscheinung kann auch beim Heißverpressen der Brettlagen zu den Laminatplatten auftreten, wobei die damit verbundenen Oberflächenbeschädigungen der Bretter gerade bevorzugt an den Außenseiten der Außenlagen einer Verbundplatte entstehen. Bei dem hier beschriebenen Verfahren traten diese nachteiligen Erscheinungen zwar nur stellenweise, jedoch wiederholt auf, obwohl die zu verarbeitenden Bretter nach Erfahrungen einem geeigneten Trocknungsverlauf unterworfen wurden.

Beim Zerteilen von Kanthölzern in die für die Laminaterzeugung erforderlichen dünnen Bretter mittels der Schneidtechnik wird verständlicherweise darauf geachtet, ein Kantholz bestimmter Dicke vollständig in eine Anzahl von Brettern möglichst gleicher Dicke aufzuteilen, so daß am Ende kein zu dünnes oder zu dickes Brett als Abfall übrig bleibt und sämtliche aus dem Kantholz erzeugten Bretter vollständig in die Weiterverarbeitung gelangen können. Nach Untersuchungen hat sich erstaunlicherweise gezeigt, daß insbesondere das Restbrett, welches beim wiederholten schneidenden Abtrennen von Brettern vom Kantholz als letztes Brett übrig bleibt, andere Eigenschaften aufweist, als die jeweils abgeschnittenen und unter Biegung am Messer entlang abgeführten Bretter. Das unterschiedliche Verhalten besteht im wesentlichen darin, daß zwar sämtliche Bretter nach dem Schneiden im wesentlichen die gleiche Holzfeuchte aufweisen, der Trocknungsverlauf insbesondere des Restbrettes jedoch anders ist als derjenige der übrigen Bretter. Die Restbretter müssen einer längeren oder anderen und eventuell schonenderen Trocknung unterworfen werden als die übrigen Bretter, um den gleichen für die Weiterverarbeitung erforderlichen Endtrockengehalt zu erhalten und dabei unbeschädigt zu bleiben. Dies kann seine Ursache eventuell darin haben, daß die durch den Schneidvorgang jeweils abgetrennten Bretter bei der unter leichter Krümmung erfolgenden Abnahme vom Restkantholz in ihrer Oberflächenstruktur geöffnet werden, so daß beim Trocknen das verdampfte Wasser schneller austreten kann. Das Restbrett hingegen erfährt keine solche Krümmung, so daß die Oberflächenstrukturen und damit die Poren im wesentlichen mehr verschlossen bleiben als bei den vom Restkantholz abgetrennten Brettern. Letztlich klar sind die Zusammenhänge jedoch noch nicht.

Jedenfalls konnte das Problem mit den Restbrettern dadurch gelöst werden, daß die Restbretter vom weiteren Verarbeitungsgang erst einmal ferngehalten wurden.

Erfindungsgemäß wird daher zur Lösung des vorstehend geschilderten Problems ein Verfahren gemäß Patentanspruch 1 vorgeschlagen.

Es besteht daher die Möglichkeit, die Restbretter abzusondern, einer vollständig getrennten Weiterbehandlung zu unterwerfen und neben Enderzeugnissen aus den übrigen Brettern getrennt Enderzeugnisse aus den Restbrettern zu erzeugen, so daß im Fertigprodukt keine Durchmischung der beiden Bretttypen entsteht. Dies ist beispielsweise dann möglich, wenn neben Platten für die Möbelindustrie, für die Bretter mit einer Feuchte von 4-8 Gew.-% erforderlich sind, auch Bauplatten erzeugt werden, bei denen die Bretter eine Feuchte von etwa 12 Gew.-% haben können. Jedoch auch diese Maßnahme ist für eine quasi kontinuierliche Produktion nicht sehr zufriedenstellend, da Zwischenlagerungsmöglichkeiten vorgesehen werden müssen, um in einer vorgesehenen Fertigungsstraße intermittierend entweder die Restbretter oder die übrigen Bretter zu verwenden, wobei zusätzlich der Trockner bei Behandlung jeweils des anderen Bretttyps umgestellt werden muß.

Unterschiedliches Verhalten ist zwar insbesondere zwischen den Restbrettern und den übrigen, aus einem Kantholz geschnittenen Brettern beobachtet worden, gewisse Unterschiede im weiteren Verarbeitungsverhalten treten aber auch zwischen Brettern auf, die aus unterschiedlichen Kantholzpositionen bzw. Positionen des Baumstammes kommen. Dieses unterschiedliche Verhalten kann durch strukturelle Unterschiede im Holz bedingt sein, da beispielsweise die Jahresringe des Holzes bei Brettern aus der Stammmitte weitgehend senkrecht zur Brettoberfläche verlaufen, während ihre Richtung zur Brettoberfläche immer flacher wird, je weiter das Brett von der Stammitte entfernt ist. Da Holz in Jahresringrichtung und quer dazu unterschiedliches Schrumpfverhalten aufweist, können hierdurch Unterschiede in den Verarbeitungseigenschaften bedingt sein. Bei der Herstellung von Laminaterzeugnissen aus gesägten Brettern treten derartige Probleme nicht auf, da bei diesem herkömmlichen Verfahren das ganze Kantholz vor dem Zerteilen in Bretter getrocknet wird.

Um sämtliche Bretter möglichst endproduktgerecht weiterverarbeiten zu können, wird daher erfindungsgemäß vorgeschlagen, die Endbretter und je nach Erfordernis auch die übrigen Bretter je nach ihrer Herkunftsposition aus dem Stamm nach dem Schneiden getrennt zu halten und einer individuellen Weiterbehandlung, insbesondere Trocknung zu unterwerfen.

Dafür muß es nicht erforderlich sein, daß jedes Brett einer aus einem Kantholz erzeugten Brettfolge einer getrennten Behandlung zugeführt wird. Abgesehen von der Sonderbehandlung der Restbretter kann es ausreichen, die übrigen Bretter entsprechend ihrer Schneidfolge gruppenweise getrennt weiterzubehandeln. So kann es sich bei zwei hintereinander angeordneten Schneidmaschinen beispielsweise anbieten, die bei einem Durchlauf des Kantholzes durch beide Maschinen erzeugten zwei Bretter einer gemeinsamen Weiterbehandlungsgruppe zuzuführen.

Die Gruppierung der aus einem Kantholz erzeugten Bretter kann auch von der Art des Kantholzes abhängen. Werden Kanthölzer verarbeitet, die die Achse des Baumstammes im wesentlichen als Mittelachse enthalten, so entstehen symmetrisch zu dieser Mittelachse Bretter aus im wesentlichen gleicher Stammposition, die möglicherweise jeweils zur Weiterbehandlung zusammengebracht werden. Als vorteilhaft bietet sich daher eine Lösung an, bei der die Bretter nach dem Schneidvorgang einzeln oder gruppenweise fördermittelmäßig voneinander getrennt bleiben und unterschiedlichen, parallelen Trocknungswegen zugeführt werden, um nach Trocknung auf die gleiche Restfeuchte, jedoch bei unterschiedlichen Bedingungen, wieder für die gemeinsame Weiterverarbeitung zusammen oder aber auch getrennt zur Weiterverarbeitung geführt zu werden.

Da in Anlagen der beschriebenen Art beispielsweise Etagen-Durchlauftrockner verwendet werden, besteht eine besonders bevorzugte Ausführungsform der Erfindung darin, einen Trockner zu verwenden, der erfindungsgemäß speziell derart ausgebildet ist, daß mindestens eine seiner Durchlaufetagen zum Trocknen bestimmter Bretter getrennt von den anderen Etagen mit einer unterschiedlichen Geschwindigkeit betrieben werden kann. Zweckmäßigerweise sind an dem Trockner Meß- und Steuervorrichtungen vorzusehen, mit denen die Endtrockengehalte der Bretter in den einzelnen Trockneretagen erfaßt werden und die Steuerung des Trockners derart vorgenommen werden kann, daß die unterschiedlichen Brettklassen den Trockner mit gleichem Feuchtigkeitsgehalt verlassen.

Anlagenmäßig läßt sich diese getrennte Zuführung der Bretter zum Trockner lösen. Zum Erzeugen der dünnen Bretter ist anlagenmäßig beispielsweise eine Schneidmaschinengruppe vorgesehen, die entweder nur aus einer Schneidmaschine oder auch aus zwei oder mehr Schneidmaschinen besteht, die das Kantholz durchläuft. Diese Anlage gemäß oberbegriff des Anspruchs 9 ist aus der DE-A-3 623 235 (Fig.2) bekannt, wobei gemäß der Erfindung diese Anlage die kennzeichenden Merkmale des Anspruchs 9 aufweist, so daß das Restkantholz auf einem Rückführförderer zum Eingang der Schneidmaschinengruppe zurückgeführt wird, um einen nächsten Durchlauf zu erfahren. Auf diesem Rücklaufförderer fällt beim letzten Durchlauf des Restkantholzes auch das Restbrett an. Es wird daher zweckmäßigerweise hinter der Schneidmaschinengruppe in dem Rücklaufförderer eine Weiche vorgesehen, mit der jeweils bei Ankommen eines Restbrettes dieses einem speziellen Weiterförderer zugeführt wird, der mit dem Fördersystem für die übrigen Bretter nicht in Verbindung steht. Dieser Weiterförderer kann dann an die besonders gesteuerte Etage des Trockners angeschlossen werden. Die übrigen Bretter verlassen die Schneidmaschinen im allgemeinen seitwärts oder unterhalb, wobei sie erforderlichenfalls unmittelbar eine Richtstation durchlaufen und von dort oder direkt von der Schneidmaschine aus mittels eines Förderers entweder einer Sortierstation oder gleich den übrigen Etagen des Trockners zugeführt werden können. In diesem Förderer können Weichen vorgesehen werden, über die die Bretter gesteuert unterschiedlichen Etagen des Trockners zugeleitet werden.

Anstelle eines Etagen-Durchlauftrockners ist es auch möglich, eine Trockenkammer mit Stapeltrocknung zu verwenden. Die sich an die Schneidmaschinengruppe anschließenden Förderer für die einzelnen Brettklassen werden dabei zweckmäßigerweise zu unterschiedlichen Stapelplätzen für die einzelnen Brettklassen gerichtet. Die Stapelung der Bretter kann von Hand oder auch automatisch erfolgen und zwar entweder direkt in einer Trockenkammer oder zweckmäßigerweise auf Wagen, die dann in eine Trockenkammer verbracht werden. Auf diese Weise können eine oder mehrere vorgesehene Trockenkammern mit günstigster Auslastung beschickt werden. Die Steuerung der Trocknungsbedingungen in der einzelnen Trockenkammer erfolgt nach den Erfordernissen der Brettklasse, die zu trocknen ist. Die speziell günstigsten Trocknungsbedingungen für eine Brettklasse sind durch Versuche zu ermitteln.

Um ein Verwerfen der Bretter während der Trocknung zu vermeiden, werden zwischen die Brettlagen bei der Stapelung Stapelleisten quer zur Brettrichtung eingelegt. Auch kann der fertige Stapel noch mit einem Gewicht belastet werden.

Es hat sich insgesamt gezeigt, daß Mehrschicht-Massivholzplatten, die aus geschnittenen Brettern erzeugt werden, sich bei der späteren Anwendung weniger verziehen als solche Platten, die aus gesägten Brettern erstellt werden. Dies ist ein zusätzlicher Vorteil neben demjenigen der enormen Rohmaterialersparnis. Die vorliegende Erfindung trägt dazu bei, ein solches Verfahren noch qualitätsstabiler zu gestalten, indem es gelungen ist, eine unvorhergesehene Störung in dem Grundablauf des Verfahrens zu erkennen und durch zweckmäßige Mittel bzw. zweckmäßige Verfahrensmaßnahmen zu beherrschen.

## Patentansprüche

1. Verfahren zum Herstellen einer Mehrschicht-Massivholzplatte oder eines ähnlichen Mehrschicht-Laminaterzeugnisses durch Preßverleimen mindestens zweier Lagen aus lamellenartigen Brettern, bei dem die lamellenartigen Bretter durch spanlos schneidendes, vollständiges Zerteilen eines Kantholzes in eine Anzahl von Brettern möglichst gleicher Dicke erzeugt werden, indem jedes Kantholz in Längsrichtung gegen ein Messer vorgeschoben wird, wobei das Kantholz an der Seite des abzutrennenden Brettes durch ein dem Messer vorgelagertes Gegendruckelement abgestützt und von der gegenüberliegenden Seite durch eine Andruckeinrichtung gegen Messer und Gegendruckelement gedrückt wird, so daß die jeweils abgeschnittenen, als übrige Bretter bezeichneten Bretter unter Biegung gemäß Messerkeil des Messers daran entlang abgeführt werden, und dieser Vorgang am jeweiligen Restkantholz so oft wiederholt wird, bis nach Abtrennen eines letzten Brettes ein keiner Biegung unterworfenes Restbrett übrig bleibt,
und bei dem derart erzeugte lamellenartige Bretter einem Trocknungsvorgang und gegebenenfalls weiteren erforderlichen Bearbeitungsschritten unterworfen werden, bevor sie unter Beleimung zu diesen mindestens zwei Lagen zusammengefügt werden, dadurch gekennzeichnet, daß die nach wiederholtem Abtrennen von Brettern jeweils verbleibenden Restbretter gleicher Dicke gegenüber den übrigen Brettern von diesen abgesondert und einer getrennten Weiterbehandlung unterworfen werden.

2. Verfahren nach Anspruch 1, dadurch gekennzeichnet, daß die übrigen Bretter bis auf eine Holzfeuchte von 15 Gew.-% und weniger, vorzugsweise auf eine Holzfeuchte von 4-12 Gew.-% getrocknet werden.

3. Verfahren nach Anspruch 1, dadurch gekennzeichnet, daß die Restbretter getrennt zu mehrschichtigen Laminaterzeugnissen verarbeitet werden.

4. Verfahren nach Anspruch 3, dadurch gekennzeichnet, daß die Restbretter auf eine Holzfeuchte von 15 Gew.-% und weniger getrocknet werden, wobei die Restbretter einer langsameren Trocknung unterworfen werden als die übrigen Bretter.

5. Verfahren nach Anspruch 4, dadurch gekennzeichnet, daß die Restbretter auf eine Holzfeuchte von 10-15 Gew.-% getrocknet und zu Bauplatten verarbeitet werden.

6. Verfahren nach Anspruch 1, dadurch gekennzeichnet, daß die Restbretter und die übrigen Bretter unterschiedlichen Trockenbedingungen unterworfen werden, um im wesentlichen einen gleichen Endtrockengehalt zu erreichen und nach der Trocknung und eventuellen weiteren Bearbeitungsschritten zum Erstellen der Mehrschicht-Laminaterzeugnisse wieder zusammengeführt werden.

7. Verfahren nach Anspruch 6, dadurch gekennzeichnet, daß die Restbretter und die übrigen Bretter auf eine Holzfeuchte von 15 Gew.-% und weniger, vorzugsweise auf eine Holzfeuchte von 4-12 Gew.-% getrocknet werden.

8. Verfahren nach Anspruch 6 oder 7, dadurch gekennzeichnet, daß eine Trockeneinrichtung mit mindestens zwei parallelen Durchlaufwegen verwendet wird, von denen zumindest einer mit einer höheren Verweilzeit bzw. Durchlaufgeschwindigkeiten betreibbar ist als der bzw. die anderen Durchlaufwege.

9. Anlage zur im wesentlichen kontinuierlichen Durchführung des Verfahrens nach einem der Ansprüche 1 bis 7 mit mindestens einer Schneidmaschine oder Folge von Schneidmaschinen zum Erzeugen der lamellenartigen Bretter, an welche erste Fördermittel zum seitlichen Abführen der abgeschnittenen lamellenartigen Bretter, dadurch gekennzeichnet, daß zweite Fördermitel zum Rückführen des Kantholzes am Eingang der Schneidmaschine oder Schneidmaschinenfolge mit einem mittels einer Weiche angeschlossenen Restbrettförderer versehen sind, der getrennt von den ersten Fördermitteln für die abgeschnittenen übrigen Bretter ist.

10. Anlage nach Anspruch 9, dadurch gekennzeichnet, daß die Durchlaufmittel eines Mehretagendurchlauftrockners zum Trocknen der lamellenartigen Bretter durch zumindest eine der Trockneretagen in ihrer Geschwindigkeit getrennt von den Durchlaufmitteln der übrigen Etagen steuerbar sind.

11. Anlage nach Anspruch 10, dadurch gekennzeichnet, daß der Restbrettförderer mit dieser mindestens einen getrennt steuerbaren Durchlaufetage des Trockners verbunden ist.

## Claims

1. A method for producing a multilayer solid timber board or a similar multilayer laminate product by press gluing of at least two layers of lamella-type boards, in which the lamella-type boards are produced by complete chipless-cut splitting of squared timber into a number of boards of as uniform as possible a thickness, each piece of squared timber being fed in the longitudinal direction towards a cutter, the squared timber being supported, on the side of the board to be separated, by a counter-pressure member disposed in front of the cutter and being pressed against the cutter and counter-pressure member from the opposite side by a pressure device, such that the cut-away boards, designated other boards, are bent in accordance with the cutter slant and conveyed away along said cutter, and this procedure being repeated with the respective remaining squared timber as often as is necessary until, after separation of a last board, one remaining board, not subjected to any bending, remains, and in which lamella-type boards produced in this way are subjected to a drying process and optionally additional necessary processing steps, before they are assembled by gluing into at least two layers, characterized in that the remaining boards left after repeated board separation and of uniform thickness with respect to the other boards are separated there from and subjected to separate further treatment.

2. A method according to claim 1, characterized in that the other boards are dried to a wood moisture level of 15 % by weight or less, preferably to a wood moisture level of 4-12 % by weight.

3. A method according to claim 1, characterized in that the remaining boards are made separately into multi-layer laminate products.

4. A method according to claim 3, characterized in that the remaining boards are dried to a wood moisture level of 15 % by weight or less, the remaining boards being subjected to slower drying than the other boards.

5. A method according to claim 4, characterized in that the remaining boards are dried to a moisture level of from 10-15 % by weight and made into building boards.

6. A method according to claim 1, characterized in that the remaining boards and the other boards are subjected to different drying conditions, in order to achieve substantially the same end dry content and, after drying and possible additional processing steps, are brought back together to produce multi-layer laminate products.

7. A method according to claim 6, characterized in that the remaining boards and the other boards are dried to a wood moisture level of 15 % by weight or less, preferably to a wood moisture level of from 4-12 % by weight.

8. A method according to claim 6 or claim 7, characterized in that a drying device with at least two parallel flow paths is used, at least one of which may be operated with a longer residence time or higher flow speeds than the other flow path(s).

9. An installation for substantially continuous implementation of the method according to any one of claims 1 to 7, comprising at least one cutting machine or series of cutting machines for producing the lamella-type boards, on which first conveying means are provided for lateral removal of the cut-away lamella-type boards, characterized in that second conveying means for conveying the squared timber back to the inlet into the cutting machine or cutting machine series are provided, which have a remaining board conveyor connected by means of a switch, said remaining board conveyor being separate from the first conveying means for the cut-away other boards.

10. An installation according to claim 9, characterized in that the flow means of a multistage continuous-flow drier for drying the lamella-type boards may be controlled by at least one of the drier stages at a speed different from the flow means of the other stages.

11. A method according to claim 10, characterized in that the remaining board conveyor is connected with said at least one separately controllable flow stage of the drier.

## Revendications

1. Procédé pour fabriquer un panneau de bois massif à couches multiples ou un produit stratifié similaire à couches multiples par encollage sous pression d'au moins deux couches formées de planches en forme de lamelles, selon lequel on forme les planches en forme de lamelles par subdivision complète, par découpage sans formation de copeaux, d'un bois équarri, en un certain nombre de planches autant que possible de la même épaisseur, en faisant avancer ce bois équarri dans la direction longitudinale, contre un couteau, le bois équarri étant supporté du côté de la planche devant être séparée, par un élément de contre-pression monté en amont du couteau, et étant repoussé sur le côté opposé, au moyen du dispositif de serrage, contre un couteau et un élément de contre-pression, de sorte que les planches respectivement découpées et désignées comme étant les autres planches, sont évacuées le long du couteau, en étant fléchies conformément au coin du couteau, le long de ce dernier, et cette opération étant répétée sur le reste respectif du bois équarri jusqu'à ce qu'après séparation d'une dernière planche, il ne reste plus aucune planche résiduelle soumise au fléchissement, et
selon lequel on soumet des planches en forme de lamelles, produites de cette manière, à une opération de séchage et éventuellement à d'autres étapes de traitement nécessaires, avant de les rassembler en les collant pour former ces au moins deux couches, caractérisé en ce que les planches résiduelles, qui subsistent respectivement après la séparation répétée de planches et possèdent la même épaisseur par rapport aux autres planches sont séparées de ces dernières et sont soumises à un traitement ultérieur séparé.

2. Procédé selon la revendication 1, caractérisé en ce qu'on fait sécher les autres planches jusqu'à ce que le bois présente une humidité de 15 % en poids et moins, et de préférence une humidité de 4-12 % en poids.

3. Procédé selon la revendication 1, caractérisé en ce qu'on traite les planches restantes séparément des produits stratifiés formés de plusieurs couches.

4. Procédé selon la revendication 3, caractérisé en ce qu'on fait sécher les planches restantes pour que le bois possède une humidité de 15 % et moins, les planches restantes étant soumises à un séchage plus lent que les autres planches.

5. Procédé selon la revendication 4, caractérisé en ce qu'on fait sécher les planches restantes pour que le bois présente une humidité de 10-15 % et qu'on les traite pour former des panneaux de construction.

6. Procédé selon la revendication 1, caractérisé en ce qu'on soumet les planches restantes et les autres planches à des conditions de séchage différentes de manière à obtenir essentiellement une même siccité finale et qu'après le séchage et d'éventuelles étapes ultérieures de traitement, on les réunit à nouveau pour former les produits stratifiés à couches multiples.

7. Procédé selon la revendication 6, caractérisé en ce qu'on fait sécher les planches restantes et les autres planches pour que le bois possède une humidité de 15 % et moins et de préférence une humidité de 4-12 %.

8. Procédé selon la revendication 6 ou 7, caractérisé en ce qu'on utilise un dispositif de séchage comportant au moins deux voies parallèles de passage, dont on peut faire fonctionner l'une au moins avec un temps de séjour plus élevé ou une vitesse de passage plus élevée que la ou les autres voies de passage.

9. Installation pour mise en oeuvre essentiellement continue du procédé selon l'une des revendications 1 à 7, comportant au moins une machine de coupe ou une suite de machines de coupe pour produire les planches en forme de lamelles, sur lesquelles s'appliquent des premiers moyens d'entraînement sont prévus pour évacuer latéralement les planches en forme de lamelles découpées, caractérisée en ce que des seconds moyens d'entraînement sont prévus pour ramener le bois équarri à l'entrée de la machine de coupe ou de la suite de machines de coupe avec un convoyeur d'entraînement des planches restantes, qui est raccordé au moyen d'un aiguillage et qui est séparé des premiers moyens d'entraînement pour les autres planches découpées.

10. Installation selon la revendication 9, caractérisée en ce que les moyens d'entraînement de traversée d'un séchoir à traversée à plusieurs étages pour le séchage des planches formées de plusieurs lamelles peuvent être commandés, en ce qui concerne leur vitesse, séparément des moyens d'entraînement de traversée des autres étages.

11. Installation selon la revendication 10, caractérisée en ce que le dispositif d'entraînement des planches restantes est relié à cet au moins un étage d'entraînement de traversée du séchoir, commandable séparément.
